# EUROPÄISCHE PATENTSCHRIFT

(11) **EP 2 189 319 B1**
(45) Veröffentlichungstag und Bekanntmachung des Hinweises auf die Patenterteilung: **27.03.2013**
(21) Anmeldenummer: 09014328.0
(22) Anmeldetag: 17.11.2009
(51) Int. Cl.: B60K 17/22, F16D 3/22

(54) **Mehrteilige Längsantriebswelle für Kraftfahrzeuge**
Multi-part longitudinal drive shaft for motor vehicles
Arbre d'entraînement longitudinal en plusieurs parties pour véhicules automobiles

(30) Priorität: 21.11.2008 DE 102008058476
(43) Veröffentlichungstag der Anmeldung: 26.05.2010
(73) Patentinhaber: IFA-Technologies GmbH, 39340 Haldensleben (DE)
(72) Erfinder: Frost, Sebastian, 39590 Bindfelde (DE); Langer, Gerald, 39345 Bülstringen (DE)
(74) Vertreter: Leinung, Günter

(56) Entgegenhaltungen:
- DE-A1-102005 029 754
- DE-A1-102007 015 074
- DE-C1- 19 943 880
- US-A1- 2007 105 461

## Beschreibung

Die Erfindung betrifft eine mehrteilige Längsantriebswelle für Kraftfahrzeuge zur Übertragung eines Drehmoments, insbesondere für den Antriebsstrang eines Kraftfahrzeuges, welche aus zwei oder mehreren Wellenabschnitten und einem, die beiden Wellenabschnitte verbindenden Drehgelenk, welches ein Gleichlaufgelenk sein kann, besteht.

Derartige Längsantriebswellen sind allgemein bekannt und dienen sowohl zur Übertragung eines Drehmomentes und sind andererseits so ausgebildet, dass in einem Crashfall, d. h. bei einem Frontal-Auffahrunfall oder bei einem Crash in Längsrichtung des Fahrzeuges, die Längsantriebswelle sich in axialer Richtung verkürzt, um ein Ausknicken und Eindringen in das Innere des Kraftfahrzeuges zu vermeiden, um somit Verletzungen der im Fahrgastraum befindlichen Personen weitestgehend auszuschließen.

So ist mit der DE 199 43 880 C1 eine Längsantriebswelle mit zwei Wellenabschnitten bekannt geworden, die über ein Gleichlaufdrehgelenk miteinander verbunden sind. Das Gleichlaufdrehgelenk umfasst ein Gelenkinnenteil, das mit einem der beiden Wellenabschnitte drehfest verbunden ist. Das Gelenkaußenteil ist mit dem anderen der beiden Wellenabschnitte drehfest verbunden und in einem Käfig gehaltene Kugeln dienen zur Drehmomentenübertragung zwischen dem Gelenkinnen- und Gelenkaußenteil.

Die Durchmesserverhältnisse der beiden Wellenabschnitte sind so gewählt, dass nach dem Zerstören des Gleichlaufdrehgelenkes in einem Crashfall ein teleskopartiges und im Wesentlichen kraftloses Ineinanderverfahren der beiden Wellenabschnitte möglich werden soll, wenn der in axiale Richtung maximal zulässige Verschiebeweg des Gleichlaufdrehgelenkes überschritten wird.

Durch die unterschiedliche Dimensionierung der betreffenden Funktionsteile der Antriebsordnung, um diese zueinander teleskopieren zu können, wird ein Ineinanderverschieben dieser Teile sicher gewährleistet, allerdings bedarf es doch erheblicher Krafteinwirkungen, um diesen Vorgang des Telekopierens einzuleiten und gleichfalls ist nicht auszuschließen, dass die Längsantriebswelle ausknickt.

Mit diesem Problem befasst sich auch die Lösung nach der DE 10 2005 029 754 B 4, welche eine mehrteilige Längsantriebswelle für den Antriebsstrang eines Kraftfahrzeuges beschreibt, welche aus zwei Wellenabschnitten besteht, die über ein Drehgelenk miteinander verbunden und die Wellenabschnitte mit unterschiedlichen Durchmessern ausgebildet sind, so dass diese Wellenabschnitte ineinander verschiebbar sind. Im ersten Wellenabschnitt ist ein Schutzelement vorgesehen, welches das Gelenkinnenteil nach dem Zerlegen des Drehgelenkes zumindest teilweise aufnimmt und in den ersten Wellenabschnitt führen soll und das einen Befestigungsabschnitt zum Abstützen gegenüber dem ersten Wellenabschnitt und einen Aufnahmeabschnitt zur Aufnahme des Gelenkinnenteiles aufweist, ferner ist in dem Aufnahmeabschnitt eine Sollbruchstelle vorgesehen.

Eine weitere Längsantriebswelle für Kraftfahrzeuge, welche aus zwei oder mehreren Wellenabschnitten besteht, die über eine Zwischenwelle oder einen Zapfen miteinander verbunden sind, ist mit der DE 10 2007 015 074 A 1 bekannt geworden.

Die Zwischenwelle oder der Zapfen ist Träger eines Mittenlagers. In Richtung zum ersten Wellenabschnitt sind die Zwischenwelle oder der Zapfen über ein im Rohr fest angeordnetes Gelenk verbunden und die größenmäßige Ausbildung der sich in einem Crashfall verschiebenden Teile ist so gewählt, dass diese auch ineinander verschoben und geführt werden können.

Das bei dieser Längsantriebswelle vorgesehene Gelenk ist als ein Gleichlaufverschiebegelenk ausgebildet, besteht aus einem Gelenkaußenring, einer Kugelnabe, Kugeln, die in Kugelrillen vom Gelenkaußenring und der Kugelnabe führend umlaufend angeordnet sind, sowie einem Käfig. Ferner wird vorgeschlagen, dass das Gleichlaufverschiebegelenk in Richtung des einen Wellenabschnittes mit einer Dichtkappe und einem Dichtbalg abgedichtet ist und dem Gleichlaufverschiebegelenk zum anderen Wellenabschnitt und in das Innere des Rohres hineinragend, ein als Führungs- und Sicherungselement ausgebildeter Verschlussdeckel zugeordnet ist, welcher mit Sollbruchstellen ausgebildet ist.

Die vorgestellten Lösungen gewährleisten sicher ein Teleskopieren der Funktionsteile der Längsantriebswellen in einem Crashfall, jedoch besteht die Gefahr auch bei diesen Lösungen, dass unter bestimmten Umständen es nicht zu einem vollständigen Ineinanderverfahren der Wellenabschnitte kommt und somit die Gefahr besteht, dass das äußere Wellenrohr durch das Eindringen des anderen Wellenrohres infolge auftretender Biegemomente aufreißt und somit die Längsantriebswelle nur teilweise ineinander verschoben wird.

Bekannt ist ferner eine Antriebswellenanordnung, die aus einem Verbindungswellenteil, einem einschiebbaren Gleichlaufgelenk und einem Hohlwellenteil mit einer Ausnehmung besteht. In mindestens einem Teil der Ausnehmung ist ein Energie absorbierendes Material angeordnet, das Energie absorbiert, wenn das Gleichlaufgelenk infolge einer auf das Gleichlaufgelenk wirkenden vorbestimmten Kraft in den Hohlwellenteil eintaucht. Das Energie absorbierende Material kann ein Schaumstoffmaterial enthalten, z. B. einen organischen Schaum, ein Schaumstoffgefüge, einen synthetischen Schaum, einen Metallschaum u. ä. Zusätzlich zur Energieabsorption minimiert das Schaummaterial die Übertragung hochfrequenter Vibrationen der Antriebswelle (US 2007/0105461 A1, die den Oberbegriff der Ansprüche 1 und 2 definiert).

Unter Beachtung der Nachteile der bekannten Lösungen liegt der vorliegenden Erfindung die Aufgabe zugrunde, eine mehrteilige Längsantriebswelle für Kraftfahrzeuge zur Übertragung des Drehmoments, insbesondere für den Antriebsstrang eines Kraftfahrzeuges, derart weiterzuentwickeln, dass in einem Crashfall die einzelnen funktionsbestimmenden Bauteile der LängsantriebsweUe ineinander verschiebbar sind und ein unkontrolliertes Ausknicken der Wellenabschnitte der Längsantriebswelle vermieden wird.

Erfindungsgemäß wird die Aufgabe mit den Merkmalen des Anspruches 1 und des Anspruches 2 gelöst.

Besondere Ausgestaltungen und vorteilhafte Lösungen sind in den Unteransprüchen angegeben.

Die geschaffene mehrteilige Längsantriebswelle zum Übertragen von Drehmomenten im Antriebsstrang eines Kraftfahrzeuges besteht aus zwei Wellenabschnitten, die jeweils aus einem Wellenrohr gebildet werden, deren Durchmesser zueinander so abgestimmt sind, dass der Außendurchmesser des zweiten Wellenabschnittes kleiner ist als der Innendurchmesser vom Wellenrohr des ersten Wellenabschnittes.

Zur vorgestellten Längsantriebswelle gehört ferner ein Drehgelenk, vorzugsweise ein Gleichlaufverschiebegelenk, mittels dem die beiden Wellenabschnitte miteinander verbunden sind.

Die Verbindung zwischen dem ersten Wellenabschnitt und dem Gleichlaufdrehgelenk erfolgt über den Gelenkaußenring vom Gleichlaufverschiebegelenk, welcher mit dem Wellenrohr des ersten Wellenabschnittes fest verbunden ist. Die Verbindung des Gleichlaufverschiebegelenk zum zweiten Wellenabschnitt erfolgt über einen Wellenzapfen, welcher einerseits fest mit der Kugelnabe des Gleichlaufverschiebegelenkes und andererseits fest mit dem Wellenrohr des zweiten Wellenabschnittes verbunden ist. Ein vorgesehenes Zwischenlager dient der Stützung und Führung des Wellenzapfens.

Das Gleichlaufverschiebegelenk ist in bekannter Art und Weise ausgebildet, besteht aus dem Gelenkaußenring und der Kugelnabe, welche Kugelrillen aufweisen, in denen die Kugeln angeordnet und in einem zwischen dem Gelenkaußenring und der Kugelnabe vorgesehenen Käfig geführt werden.

Das Gleichlaufverschiebegelenk ist vorliegend so ausgebildet, dass, bei einer Überschreitung einer axialen Position, dieses zerlegbar ist. So werden die einzelnen Teile von den beiden Wellenabschnitten schadensfrei aufgenommen, indem der erste und der zweite Wellenabschnitt nach dem Zerfall des Gleichlaufverschiebegelenkes aufgrund auftretender Axialkräfte ineinander verschiebbar sind, dies in der Art, dass der zweite Wellenabschnitt in Richtung des ersten Wellenabschnittes verschoben wird.

Das Zwischenlager und das darin angeordnete Wälzlager sind in ihren äußeren Abmaßen so dimensioniert und ausgebildet, dass sich Teile des Wälzlagers bei einem Frontalaufprall, einem Crashfall, gleichfalls in das Innere des ersten Wellenabschnittes teleskopieren können und somit weitestgehend gesichert ist, dass die gesamte Längsantriebswelle und auch einzelne Teilstücke nicht mehr ausknicken können.

Bei der erfindungsgemäßen Lösung ist das vorgesehene Gleichlaufverschiebegelenk mittels zweier Dichtungsanordnungen sowohl zum ersten als auch zum zweiten Wellenabschnitt und somit auch nach außen hin abgedichtet, so dass einmal Verunreinigungen des Gleichlaufverschiebegelenkes ausgeschlossen sind und andererseits ein Fettaustritt aus dem Gelenk vermieden wird.

Wesentlich bei der vorgestellten Lösung ist, dass die vorgesehenen Dichtungsanordnungen neben den Schutz- und Abdichtungsfunktionen gleichfalls als Funktionselemente bei einem Crashfall dienen. Dies derart, dass die Dichtungsanordnungen so gestaltet und dimensioniert sind, dass jeweils eine Verschiebewegbegrenzung realisiert wird.

So bestehen gemäß der Erfindung eine Dichtungsanordnung aus einem Rollbalg und die andere Dichtungsanordnung aus einem Elastomerbalg.

Dieser Elastomerbalg ist im Inneren des Wellenrohres des ersten Wellenabschnittes angeordnet und der Rollbalg ist zwischen dem Gleichlaufverschiebegelenk und dem zweiten Wellenabschnitt vorgesehen. Der Rollbalg ist zum einen mit dem Gelenkaußenring des Gleichlaufverschiebegelenkes und zum anderen über einen Spannring zum Wellenzapfen fest verbunden, so dass eine funktionsbedingte Verbindung zum zweiten Wellenabschnitt gegeben ist. Dabei erfüllt der Rollbalg auch seine Dichtfunktion und entspricht in seiner Gestaltung sowie Ausbildung bekannten Rollbalgen, allerdings mit dem wesentlichen Unterschied, dass der Rollbalg gleichfalls als Wegbegrenzung dient, welcher bei einem maximalen Verschiebeweg in axialer Richtung so gedehnt wird, bis bei einem weiteren Anstieg der Crashkraft die Losbrechkaft erreicht wird, der Rollbalg nicht weiter zu verschieben bzw. zu dehnen ist, der Sollbruchbereich ist erreicht, dadurch geht der Rollbalg zu Bruch und das Teleskopieren des zweiten Wellenabschnittes wird ermöglicht.

Der im anderen Wellenrohr angeordnete Elastomerbalg erfüllt gleichfalls neben seiner Dichtfunktion die Schutzfunktion derart, dass ein kontrolliertes Ineinanderverschieben bzw. Teleskopieren der Teile des zweiten Wellenabschnittes in das Innere des ersten Wellenabschnittes möglich wird.

Dies wird realisiert durch die Gestaltung und Ausbildung des Elastomerbalges, dessen Elastomerelement aus einem Elastomer besteht oder aus einem ähnlichen elastischen Material hergestellt sein kann. So kann dieses Elastomerelement aus einem ähnlichen Kunststoff oder auch aus einem Gummimaterial bestehen, die den Eigenschaften eines Elastomers entsprechen und somit dem Elastomerelement seine Elastizität und gleichfalls die erforderliche Steifigkeit verleihen.

Dabei ist von besonderem Vorteil, dass der Elastomerbalg in seiner Gesamtheit gleichfalls als Sollbruchstelle für das Gleichlaufverschiebegelenk und somit die Längsantriebswelle wirkt.

Gemäß der vorgestellten Lösung ist das Elastomerelement in einem Aufnahme- und Befestigungsteil eingebunden, welches im Inneren des Wellenrohres vom ersten Wellenabschnitt angeordnet ist.

In der Gesamtheit ist der Elastomerbalg mit seinem Aufnahme- und Befestigungsteil weitestgehend deckelartig ausgebildet und das kreisrunde Flächenteil des Elastomerbalges, das Elastomerelement, dient dabei als Stützfläche des sich in einem Crashfall verschiebenden Wellenzapfens und der Kugelnabe des Gleichlaufverschiebegelenkes. Der Elastomerbalg ist über sein Aufnahme- und Befestigungsteil fest, so beispielsweise durch eine Presspassung zum Inneren des Wellenrohres verbunden.

Ferner gehört zur Erfindung, dass das Aufnahme- und Befestigungsteil des Elastomerbalges aus einem ringförmig ausgebildeten Bauteil besteht, welches mit einem Ansatz ausgebildet ist, in der umfänglich eine Nut vorgesehen ist. Über den äußeren Bund des Aufnahme- und Befestigungsteiles ist dieses zur Innenwandung des jeweiligen Wellenrohres verbunden und das Elastomerelement ist zum Ansatz des Aufnahme- und Befestigungsteiles befestigt. Das Aufnahme- und Befestigungsteil ist das Tragelement für das Elastomerelement und das Funktionsteil zur Verbindung zum Wellenrohr.

In einer besonderen Ausführungsvariante ist dieses Tragelement als ein ringförmiger Grundkörper ausgebildet, welcher über seinen äußeren Umfang zum Inneren des jeweiligen Wellenrohres befestigt ist und in seiner Innenbohrung eine umlaufende Nut aufweist, in die das Elastomerelement eingesetzt und verspannt ist.

Die Aufnahme-/Befestigungseinheiten, die Tragelemente sind als ein Rotationsdrehteil ausgebildet oder in einer bevorzugten Ausführungsvariante als ein Blechformteil gestaltet, wobei diese Tragelemente, ob als Drehteil oder als Blechformteil ausgebildet, die gleichen Strukturen und geometrischen Abmaße besitzen, um zum einen das Elastomerelement aufnehmen zu können und zum anderen um zur Innenwandung des jeweiligen Wellenrohres verbunden werden zu können.

Durch die Ausbildung und Anordnung der Dichtungsanordnungen ergeben sich funktionsbedingte Vorteile während des Einsatzes einer so ausgebildeten Längsantriebswelle, die darin begründet liegen, dass zum einen eine Verschiebewegbegrenzung der Längsantriebswelle realisiert wird, mit der gesichert ist, dass bei der Montage und Demontage sowie beim Einsatz der Längsantriebswelle bei gering wirkenden Axialkräften das Gleichlaufverschiebegelenk nicht zerfällt und zum anderen gewährleistet ist, dass in einem Crashfall das Gleichlaufverschiebegelenk zerfällt. Dies bei auftretenden Axialkräften, bei Crashkräften im Bereich von > 0 -10 KN. Die zum Einsatz kommenden Dichtungsanordnungen erfüllen somit Funktionen der Verschiebewegbegrenzung und des Sollbruches, dies wiederum begründet in der Ausbildung des Roll- und Elastomerbalges und ihrer Anordnung sowie Befestigung zum jeweiligen Aufnahme- und Befestigungsteil.

Der Elastomerbalg, begründet durch die Ausbildung des Elastomerelementes bewirkt einen gewissen Ausgleich von Luftströmen oder von Fettströmungen, die durch Verschiebebewegungen stattfinden können, so dass hier Entlüftungsfunktionen mit übernommen werden, somit Entlüftungseinrichtungen des Gleichlaufverschiebegelenkes nicht notwendig sind. Der Elastomerbalg beult sich temporär aus und wirkt somit für ausgleichende Strömungsverhältnisse innerhalb des Gleichlaufverschiebegelenkes.

Mit nachfolgendem Ausführungsbeispiel soll die Erfindung näher erläutert werden.

In der zugehörigen Zeichnung zeigen in
- Figur 1:: die Längsantriebswelle in normalem Betriebszustand,
- Figur 2:: die Längsantriebswelle in einer axial verschobenen Position, einer ersten Stufe eines Crashfalles,
- Figur 3:: die Längsantriebswelle in einer weiteren axial verschobenen Position, einer weiteren Stufe eines Crashfalles,
- Figur 4:: eine vergrößerte Darstellung der Einzelheit A nach Figur 1, die Ausbildung und Anordnung des Elastomerelementes zum Aufnahme- und Befestigungsteil,
- Figur 5:: eine vergrößerte Einzelheit B nach Figur 1, eine weitere Ausführungsvariante der Ausbildung und Anordnung des Elastomerelementes zum Aufnahme- und Befestigungsteil.

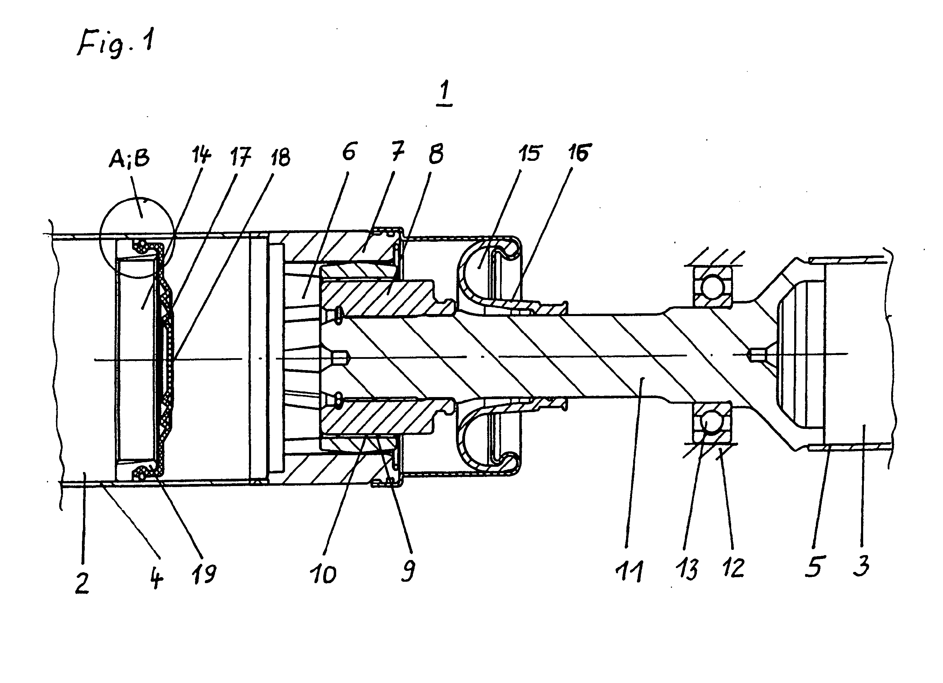

Die mehrteilige Längsantriebswelle 1 ist in ihrem Grundaufbau in der Figur 1 dargestellt und es wird gezeigt, dass die Längsantriebswelle 1 aus zwei Wellenabschnitten, so einem ersten Wellenabschnitt 2 und einem zweiten Wellenabschnitt 3 besteht, die Wellenabschnitte 2; 3 Wellenrohre 4; 5 besitzen und über ein Gleichlaufverschiebegelenk 6 miteinander verbunden sind.

Die Verbindung des ersten Wellenabschnittes 2 zum Gleichlaufverschiebegelenk 6 erfolgt über eine feste Verbindung, vorzugsweise eine Schweißverbindung zwischen dem Wellenrohr 4 zum Gelenkaußenring 7 des Gleichlaufverschiebegelenkes 6.

Die Verbindung zwischen dem Gleichlaufverschiebegelenk 6 zum zweiten Wellenabschnitt 3 erfolgt über einen Wellenzapfen 11, welcher in der Kugelnabe 8 vom Gleichlaufverschiebegelenk 6 angeordnet und andererseits fest mit dem Wellenrohr 5 des zweiten Wellenabschnittes 3 verbunden ist.

Die Abdichtung des Gleichlaufverschiebegelenkes 6 wird realisiert über Dichtungsanordnungen 14; 15, so einem Rollbalg 16 und einem Elastomerbalg 17.

Der Rollbalg 16 ist dabei zwischen dem Gleichlaufverschiebegelenk 6 und dem zweiten Wellenabschnitt 3 vorgesehen und sowohl zum Gleichlaufverschiebegelenk 6 als auch zum Wellenzapfen 11 fest verbunden.

Die feste Verbindung des Rollbalges 16 erfolgt durch die Verspannung zum Gelenkaußenring 7 des Gleichlaufgelenkes 6 und zum Wellenzapfen 11 über einen nicht näher dargestellten Spannring, welcher den Rollbalg 16 umfänglich zum Wellenzapfen 11 verspannt und zu diesem befestigt.

Auf der gegenüberliegenden Seite, der Verbindung zwischen dem Gleichlaufverschiebegelenk 6 und dem ersten Wellenabschnitt 2, erfolgt die Abdichtung des Gleichlaufverschiebegelenkes 6 über die Dichtungsanordnung 14, welche als ein Elastormerbalg 17 gestaltet ist.

Dieser Elastomerbalg 17 ist im Inneren des Wellenrohres 4 vom ersten Wellenabschnitt 2 eingesetzt und zu diesem fest verbunden.

Der Elastomerbalg 17 selbst besteht aus einem Elastomerelement 18, einem Aufnahme- und Befestigungsteil 19, dem Tragelement für das Elastomerelement 18, welches fest mit dem Aufnahme- und Befestigungsteil 19, vorzugsweise über eine Pressverbindung, mit der Innenwandung des Wellenrohres 4 vom ersten Wellenabschnitt 1 verbunden ist. Aus der Figur 1 ergibt sich ferner, dass zwischen dem ersten Wellenabschnitt 2 und dem zweiten Wellenabschnitt 3 ein Zwischenlager 12 vorgesehen ist, in dem der Wellenzapfen 11 über ein Wälzlager 13 umlaufend angeordnet ist.

Die Figur 1 zeigt somit die mehrteilige Längsantriebswelle 1 in ihrer Grundposition oder auch als Ausgangsposition zu bezeichnen, wenn die Längsantriebswelle 1 in einem Antriebsstrang eines Kraftfahrzeuges eingebaut ist und noch keinen Belastungen unterliegt.

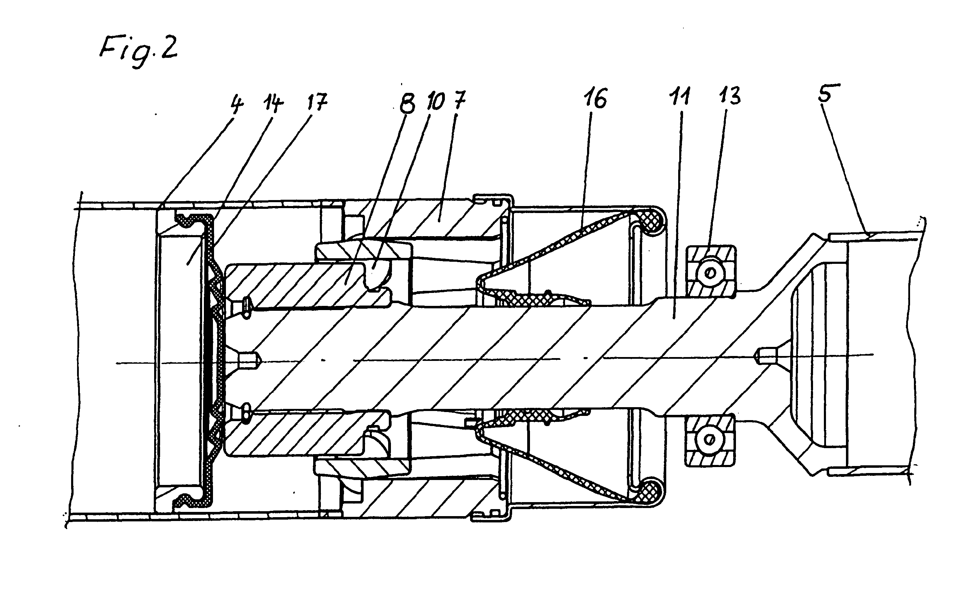

Eine erste Position des Verschiebens der Längsantriebswelle 1 ist in der Figur 2 gezeigt, das ist die Position, bei der eine Axialkraft vom Wellenabschnitt 3 über den Wellenzapfen 11, den Rollbalg 16 auf das Gleichlaufverschiebegelenk 6 wirkt.

Diese dargestellte Position ist eine erste Stufe eines eventuellen Frontalaufpralls, bei dem die auftretende Axialkraft noch nicht die Zerstörung des Gleichlaufverschiebegelenkes 6 bewirkt hat. Es ist die maximale Verschiebeposition des Gleichlaufverschiebegelenkes 6 im normalen Betriebsfall ohne dessen Zerstörung, d. h. ein Crashfall ist noch nicht eingetreten. Die Begrenzung der Verschiebung erfolgt durch den Rollbalg 16.

Diese erste Verschiebeposition der Längsantriebswelle 1 nach Figur 2 verdeutlicht, dass die Axialkraft von rechts auf das Gleichlaufverschiebegelenk 6 eingewirkt und dabei sowohl den Rollbalg 16 als auch die Kugelnabe 8 aus ihren Ausgangspositionen nach links, in Richtung des Elastomerbalges 17 verschoben hat, ohne dass der Rollbalg 16 und das Gleichlaufverschiebegelenk 6 zerstört wurden.

Bei dieser Axialkrafteinwirkung vom zweiten Wellenabschnitt 3 über den Wellenzapfen 11 auf den Rollbalg 16 und auf das Gleichlaufverschiebegelenk 6 wird der Rollbalg 16, welcher fest zum Gelenkaußenring 7 des Gleichlaufgelenkes 6 und fest zum Wellenzapfen 11 verbunden ist, gespannt, gestreckt und nimmt die in der Figur 2 dargestellte Position ein und ist noch nicht zerstört. Das Gleichlaufverschiebegelenk 6 ist gleichfalls noch nicht zerstört und in seiner Funktion gleichfalls erhalten geblieben, lediglich ist die Kugelnabe 8 infolge der axial wirkenden Kraft nach links in Richtung des Elastomerbalges 17 verschoben worden, allerdings besteht noch die Verbindung über die Kugeln 10 zum Gelenkaußenring 7 des Gleichlaufverschiebegelenkes 6 und die Funktion des Gleichlaufverschiebegelenkes 6 und die des Rollbalges 16 sind erhalten geblieben.

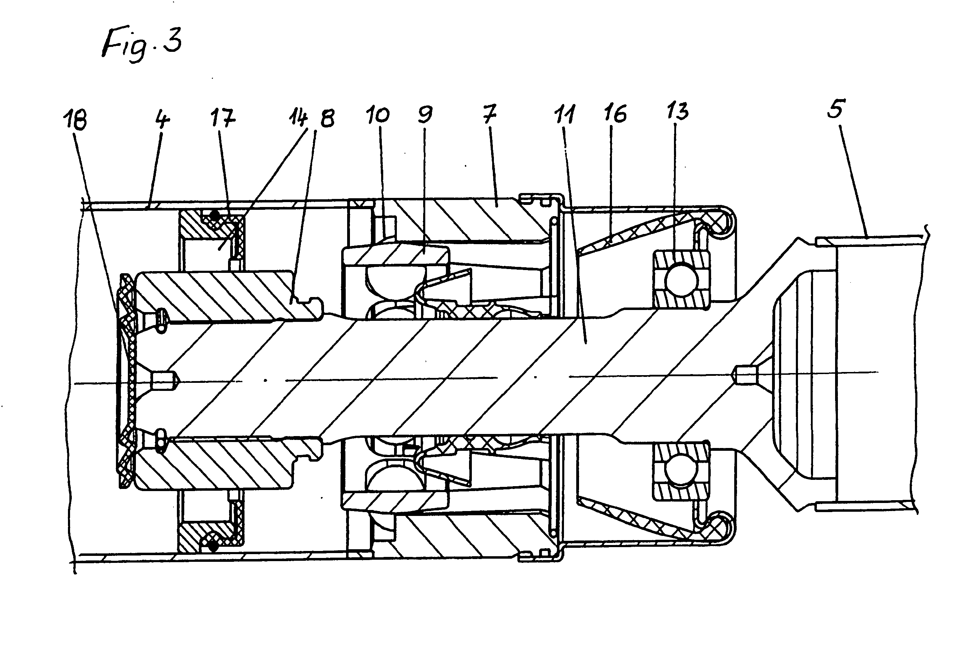

Bei einer größeren Axialkraft bzw. bei weiterer Einwirkung einer Axialkraft auf den Rollbalg 16 und das Gleichlaufverschiebegelenk 6 werden sowohl der Rollbalg 16 als auch das Gleichlaufverschiebegelenk 6 zerstört und der Wellenzapfen 11 mit der darauf befestigten Kugelnabe 8 weiter nach links in Richtung auf den Elastomerbalg 17 verschoben und kommen am Elastomerelement 18 des Elastomerbalges 17 zum Anliegen. Bei weiterer axial wirkender Kraft wird der Wellenzapfen 11 mit der Kugelnabe 8 weiter nach links verschoben und bei Erreichen einer bestimmten Axialkraftgröße wird der Elastomerbalg 17 zerstört und somit ist ein freies und kraftloses Teleskopieren des zweiten Wellenabschnittes 3 in den ersten Wellenabschnitt 2 möglich, wie in der Figur 3 dargestellt.

Der Rollbalg 16 und der Elastomerbalg 17 sind dabei so in ihrer Form und in ihren Festigkeits-/Dehneigenschaften ausgebildet, dass sie als Sollbruchstellen fungieren.

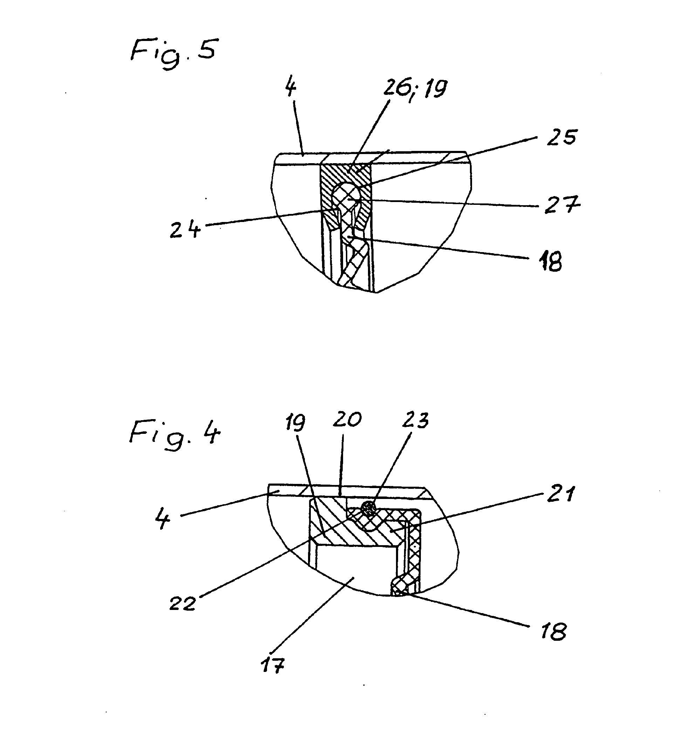

Die Ausbildung und Anordnung des Elastomerbalges 17 ist in den Figuren 4 und 5 gezeigt, welche vergrößerte Darstellungen der Einzelheiten A; B der Figur 1 wiedergeben.

So besteht gemäß Figur 4 der Elastormerbalg 17 aus dem Aufnahme- und Befestigungsteil 19, welches einen äußeren Bund 20 und einen Ansatz 21 besitzt. Das Aufnahme- und Befestigungsteil 19 ist das Tragelement des Elastomerelementes 18, welches zum Ansatz 21 des Aufnahme- und Befestigungsteiles 19 befestigt ist. Dies erfolgt derart, dass das Elastomerelement 18 auf den Ansatz 21 aufgelegt wird und mittels eines Sicherungsringes 23 zum Ansatz 21 verklemmt/verspannt ist. Der Ansatz 21 besitzt eine umlaufende äußere Nut 22, so dass sich das Elastomerelement 18 in diese Nut 22 einlegt und über den Sicherungsring 23 funktionssicher zum Aufnahme- und Befestigungsteil 19 verbunden ist.

Über den äußeren Bund 20 ist der Elastomerbalg 17 zur Innenwandung des Wellenrohres 4 vom ersten Wellenabschnitt 2 befestigt. Diese Verbindung ist als eine feste, vorzugsweise als Pressverbindung ausgebildet.

Wie auch aus den Figuren 1 bis 5 ersichtlich, ist das Elastomerelement 18 vom Elastomerbalg 17 in seinem kreisrunden Flächenteil wellenförmig gestaltet, wodurch die Aufnahmefläche des Elastomerelementes 18 und gleichfalls dessen Dehneigenschaften vergrößert werden, was sich positiv bei einem Crashfall auswirkt und das Elastomerelement 18 nach seiner Zerstörung gewisse Gleitfunktionen für die in den ersten Wellenabschnitt 2 teleskopierenden Teile übernimmt.

In einer weiteren Ausführungsvariante ist der Elastomerbalg 17 wie in Figur 5 gezeigt, als ein Ringkörper 26 ausgebildet, welcher über seinen äußeren Bund zur Innenwandung des Wellenrohres 4 des ersten Wellenabschnittes 2 verbunden ist, der Ringkörper 26 in seiner Innenbohrung eine umlaufende Nut 24 besitzt, in der das Elastomerelement 18 Aufnahme findet.

Wie in der Figur 5 auch gezeigt, ist das Elastomerelement 18 bei dieser Ausbildung mit einer umlaufenden Wulst 27 gestaltet, die von der Form her dem erweiterten Nutgrund 25 der Nut 24 entspricht und somit eine formschlüssige Verbindung zwischen dem Elastomerelement 18 und dem Aufnahme- und Befestigungsteil 19 gegeben ist, während die kraftschlüssige Verbindung zwischen diesen beiden Teilen über das Verspannen der beiden frontseitigen Ansätze der Nut 24 vom Ringkörper 26 erfolgt, so über ein Verbördeln der beiden Ansätze der Nut 24.

Die Aufnahme- und Befestigungsteile 19 vom Elastomerbalg 17, ob ausgebildet gemäß Figur 4 oder gemäß Figur 5, können sowohl als Drehteil oder auch als ein Blechformteil ausgebildet werden und unabhängig von der Ausbildung des Aufnahme- und Befestigungsteiles 19 wird das Elastomerelement 18 in der oben beschriebenen Art und Weise zu dem jeweiligen Aufnahme- und befestigungsteil 19 verbunden.

## Patentansprüche

1. Mehrteilige Längsantriebswelle für Kraftfahrzeuge zur Übertragung eines Drehmomentes, bestehend aus zwei Wellenabschnitten, einem ersten Wellenabschnitt (2) und einem zweiten Wellenabschnitt (3), die über ein Drehgelenk, so ein Gleichlaufverschiebegelenk (6), verbunden sind, der erste Wellenabschnitt (2) ist fest mit dem Gelenkaußenring (7) des Gleichlaufverschiebegelenkes (6) und der zweite Wellenabschnitt (3) ist über einen im Wellenabschnitt (3) eingesetzten Wellenzapfen (11) fest und mit der Kugelnabe (8) des Gleichlaufverschiebegelenkes (6) verbunden, das Wellenrohr (4) des ersten Wellenabschnittes (2) besitzt einen größeren Innendurchmesser gegenüber dem Außendurchmesser des Wellenrohres (5) vom zweiten Wellenabschnitt (3), das Gleichlaufverschiebegelenk (6) ist bei einer axial wirkenden Kraft zerlegbar, die Funktionsteile des zweiten Wellenabschnittes (3) sind zum ersten Wellenabschnitt (2) teleskopierbar und das Gleichlaufverschiebegelenk (6) ist zu den Wellenabschnitten (2; 3) mittels vorgesehener Dichtungen in Form eines Verschlussdeckels und eines Rollbalges (16) abgedichtet, wobei der im ersten Wellenabschnitt (2) angeordnete Verschlussdeckel ein Elastomerbalg (17) ist, **dadurch gekennzeichnet, dass**
der Elastomerbalg (17) aus einem als Trägerelement gestaltetes Aufnahme- und Befestigungsteil (19) und einem Elastomerelement (18) besteht, das Aufnahme- und Befestigungsteil (19) mit einem äußeren Bund (20), einem Ansatz (21) mit umlaufender Nut (22) ausgebildet ist, das Elastomerelement (18) ein wellenförmig gestaltetes kreisflächiges Mittelteil besitzt und auf dem Ansatz (21) vom Aufnahme- und Befestigungsteil (19) angeordnet ist.

2. Mehrteilige Längsantriebswelle für Kraftfahrzeuge zur Übertragung eines Drehmomentes, bestehend aus zwei Wellenabschnitten, einem ersten Wellenabschnitt (2) und einem zweiten Wellenabschnitt (3), die über ein Drehgelenk, so ein Gleichlaufverschiebegelenk (6), verbunden sind, der erste Wellenabschnitt (2) ist fest mit dem Gelenkaußenring (7) des Gleichlaufverschiebegelenkes (6) und der zweite Wellenabschnitt (3) ist über einen im Wellenabschnitt (3) eingesetzten Wellenzapfen (11) fest und mit der Kugelnabe (8) des Gleichlaufverschiebeselenkes (6) verbunden, das Wellenrohr (4) des ersten Wellenabschnittes (2) besitzt einen größeren Innendurchmesser gegenüber dem Außendurchmesser des Wellenrohres (5) vom zweiten Wellenabschnitt (3), das Gleichlaufverschiebegelenk (6) ist bei einer axial wirkenden Kraft zerlegbar, die Funktionsteile des zweiten Wellenabschnittes (3) sind zum ersten Wellenabschnitt (2) teleskopierbar und das Gleichlaufverschiebegelenk (6) ist zu den Wellenabschnitten (2; 3) mittels vorgesehener Dichtungen in Form eines Verschlussdeckels und eines Rollbalges (16) abgedichtet, wobei der im ersten Wellenabschnitt (2) angeordnete Verschlussdeckel ein Elastomerbalg (17) ist, **dadurch gekennzeichnet, dass**
der Elastomerbalg (17) aus einem als Trägerelement gestaltetes Aufnahme- und Befestigungsteil (19) und einem Elastomerelement (18) besteht und das als Tragelement ausgebildete Aufnahme- und Befestigungsteil (19) als ein Ringkörper (26) gestaltet ist, welcher eine innere umlaufende Nut (24) mit erweitertem Nutgrund (25) besitzt, in der das Elastomerelement (18) angeordnet ist

3. Mehrteilige Längsantriebswelle nach den Ansprüchen 1 oder 2, **dadurch gekennzeichnet, dass**
das Elastomerelement (18) mit Sollbruchstellen ausgebildet ist.

4. Mehrteilige Längsantriebswelle nach Anspruch 1, **dadurch gekennzeichnet, dass**
das Elastomerelement (18) des Elastomerbalges (17) elastisch verformbar ist, sich temporär ausbeult und so ausgleichende Strömungsverhältnisse im Gleichlaufverschiebegelenk (6) erzielt werden.

## Claims

1. Multi-part longitudinal drive shaft for motor vehicles for transfer of torque, comprising of two shaft sections, a first shaft section (2) and a second shaft section (3), which are connected by a swivel joint, such as a synchronous plunging joint (6), the first shaft section (2) being firmly connected to the joint outer ring (7) of the synchronous plunging joint (6) and the second shaft section (3) being firmly connected to the ball hub (8) of the synchronous plunging joint (6) via a shaft pin (11) inserted in the shaft section (3), the shaft tube (4) of the first shaft section (2) having a larger inner diameter as compared to the outer diameter of the shaft tube (5) of the second shaft section (3); the synchronous plunging joint (6) can be disassembled by an axially acting force, the function parts of the second shaft section (3) can be telescoped against the first shaft section (2) and the synchronous plunging joint (6) is sealed against the shaft sections (2; 3) by the intended seals in the shape of a closure lid and a rolling lobe (16), with the closure lid placed in the first shaft section (2) being an elastomer bellows (17) **characterised in that**
the elastomer bellows (17) comprises of a receptacle and attachment part (19) designed as a carrier element and an elastomer element (18), the receptacle and attachment part (19) being formed with an outer collar (20), an attachment (21) with circumfering groove (22), the elastomer element (18) having a wave-shaped circular centre part and being placed on the attachment (21) of the receptacle and attachment part (19).

2. Multi-part longitudinal drive shaft for motor vehicles for transfer of torque, comprising of two shaft sections, a first shaft section (2) and a second shaft section (3), which are connected by a swivel joint, such as a synchronous plunging joint (6), the first shaft section (2) being firmly connected to the joint outer ring (7) of the synchronous plunging joint (6) and the second shaft section (3) being firmly connected to the ball hub (8) of the synchronous plunging joint (6) via a shaft pin (11) inserted in the shaft section (3), the shaft tube (4) of the first shaft section (2) having a larger inner diameter as compared to the outer diameter of the shaft tube (5) of the second shaft section (3); the synchronous plunging joint (6) can be disassembled by an axially acting force, the function parts of the second shaft section (3) can be telescoped against the first shaft section (2) and the synchronous plunging joint (6) is sealed against the shaft sections (2; 3) by the intended seals in the shape of a closure lid and a rolling lobe (16), with the closure lid placed in the shaft section (2) being an elastomer bellows (17) **characterised in that**
the elastomer bellows (17) comprises of a receptacle and attachment part (19) designed as a carrier element and an elastomer element (18) and that the receptacle and attachment part (19) designed as a carrier element is designed as a ring body (26) that has an inner circumfering groove (24) with expanded groove bottom (25) in which the elastomer element (18) is placed.

3. Multi-part longitudinal drive shaft according to claims 1 or 2, **characterised in that**
the elastomer element (18) is designed with predetermined breaking points.

4. Multi-part longitudinal drive shaft according to claim 1, **characterised in that**
the elastomer element (18) of the elastomer bellows (17) is elastically deformable, temporarily bulging and thus balancing the flow situation in the synchronous plunging joint (6).

## Revendications

1. Arbre moteur longitudinal en plusieurs parties destiné aux véhicules automobiles pour la transmission d'un couple, composé de deux tronçons d'arbre, un premier tronçon d'arbre (2) et un deuxième tronçon d'arbre (3) reliés par une articulation tournante, à savoir un joint coulissant homocinétique (6), le premier tronçon d'arbre (2) est fixement relié à la bague extérieure de joint (7) du joint coulissant homocinétique (6) et le deuxième tronçon d'arbre (3) est fixement relié au moyeu sphérique (8) du joint coulissant homocinétique (6) par un tourillon d'arbre (11) inséré dans le tronçon d'arbre (3), le tube d'arbre (4) du premier tronçon d'arbre (2) possède un plus grand diamètre intérieur par rapport au diamètre extérieur du tube d'arbre (5) du deuxième tronçon d'arbre (3), le joint coulissant homocinétique (6) est démontable sous l'action d'une force axiale, les pièces fonctionnelles du deuxième tronçon d'arbre (3) sont télescopables vers le premier tronçon d'arbre (2) et le joint coulissant homocinétique (6) est étanchéifié, vers les tronçons d'arbre (2; 3), au moyen de joints d'étanchéité prévus sous forme de couvercle d'obturation et d'un soufflet roulant (16), le couvercle d'obturation disposé dans le premier tronçon d'arbre (2) étant un soufflet élastomère (17), **caractérisé par le fait que**
le soufflet élastomère (17) est composé d'une pièce de support et de fixation conçue sous forme d'élément de retenue (19) ainsi que d'un élément élastomère (18), la pièce de support et de fixation (19) est constituée d'un collet extérieur (20), d'une embase (21) avec rainure circulaire (22), l'élément élastomère (18) possède une pièce centrale avec surface en cercle conçue en forme ondulatoire et disposée sur l'embase (21) de la pièce de support et de fixation (19).

2. Arbre moteur longitudinal en plusieurs parties destiné aux véhicules automobiles pour la transmission d'un couple, composé de deux tronçons d'arbre, un premier tronçon d'arbre (2) et un deuxième tronçon d'arbre (3) reliés par une articulation tournante, à savoir un joint coulissant homocinétique (6), le premier tronçon d'arbre (2) est fixement relié à la bague extérieure de joint (7) du joint coulissant homocinétique (6) et le deuxième tronçon d'arbre (3) est fixement relié au moyeu sphérique (8) du joint coulissant homocinétique (6) par un tourillon d'arbre (11) inséré dans le tronçon d'arbre (3), le tube d'arbre (4) du premier tronçon d'arbre (2) possède un plus grand diamètre intérieur par rapport au diamètre extérieur du tube d'arbre (5) du deuxième tronçon d'arbre (3), le joint coulissant homocinétique (6) est démontable sous l'action d'une force axiale, les pièces fonctionnelles du deuxième tronçon d'arbre (3) sont télescopables vers le premier tronçon d'arbre (2) et le joint coulissant homocinétique (6) est étanchéifié, vers les tronçons d'arbre (2; 3), au moyen de joints d'étanchéité prévus sous forme de couvercle d'obturation et d'un soufflet roulant (16), le couvercle d'obturation disposé dans le tronçon d'arbre (2) étant un soufflet élastomère (17), **caractérisé par le fait que**
le soufflet élastomère (17) est composé d'une pièce de support et de fixation conçue sous forme d'élément de retenue (19) et d'un élément élastomère (18) et la pièce de support et de fixation constituée comme élément de retenue (19) est conçue sous forme de corps circulaire (26) possédant une rainure circulaire intérieure (24) avec fond de rainure étendu (25) dans laquelle l'élément élastomère (18) est disposé.

3. Arbre moteur longitudinal en plusieurs parties conformément aux revendications n°1 ou n°2, **caractérisé par le fait que**
l'élément élastomère (18) est constitué avec des sections de rupture intentionnellement prévues.

4. Arbre moteur longitudinal en plusieurs parties conformément à la revendication n°1, **caractérisé par le fait que**
l'élément élastomère (18) du soufflet élastomère (17) est déformable élastiquement, se redresse temporairement et que des conditions d'écoulement de compensation dans le joint coulissant homocinétique (6) sont obtenues.
